# EUROPEAN PATENT APPLICATION

(11) **EP 4 726 810 A1**
(43) Date of publication of application: **15.04.2026**
(21) Application number: 25203805.4
(22) Date of filing: 22.09.2025
(51) Int. Cl.: H01M 4/38, H01M 10/052, H01M 50/403, H01M 50/414, H01M 50/431, H01M 50/446, H01M 50/457, H01M 50/46, H01M 50/497

(54) **MULTILAYERED SEPARATOR FOR LITHIUM SECONDARY BATTERY, METHOD FOR PREPARING THE SAME AND LITHIUM SECONDARY BATTERY INCLUDING THE SAME**

(30) Priority: 11.10.2024 KR 20240138179; 09.09.2025 KR 20250128598
(71) Applicant: SK On Co., Ltd., Seoul 03161 (KR)
(72) Inventor: HWANG, Hye Su, 34124 Daejeon (KR); KIM, Gun Young, 34124 Daejeon (KR); HAN, Ju Sung, 34124 Daejeon (KR)
(74) Representative: Prüfer & Partner mbB Patentanwälte · Rechtsanwälte

(57) **Abstract**

A multilayered separator for a lithium secondary battery according to embodiments of the present disclosure includes: a porous substrate; a first coating layer disposed on one surface of the porous substrate, and including a first binder, a nitrate compound and a first lithium salt; and a second coating layer disposed on a surface of the porous substrate opposite the surface in contact with the first coating layer, and including a second binder and a second lithium salt.

## Description

### [BACKGROUND OF THE INVENTION]

### 1. Field of the Invention

The present disclosure relates to a multilayered separator for a lithium secondary battery, a method for preparing the same, and a lithium secondary battery including the same.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric cars.

Among secondary batteries, lithium secondary batteries are actively being researched and developed due to their high operating voltage, high energy density per unit weight, and advantages in charging speed and weight reduction.

Recently, lithium secondary batteries including lithium metal electrodes have been actively researched and developed to achieve high energy density and rapid charging properties.

When lithium secondary batteries including lithium metal electrodes are repeatedly charged and discharged, lithium dendrites may be formed due to non-uniform lithium plating on the surface of the lithium metal electrode. These lithium dendrites protrude from the lithium metal surface, thereby damaging or penetrating the separator and contacting the cathode, which may significantly degrade the battery cycle life.

Therefore, modifications to the structure, surface treatment, and property enhancement of the electrode or separator may be necessary to improve the cycle life propertiesand stability of lithium metal batteries.

### [SUMMARY OF THE INVENTION]

An object of the present disclosure is to provide a multilayered separator for a lithium secondary battery with enhanced mechanical properties.

Another object of the present disclosure is to provide a lithium secondary battery including the multilayered separator.

Still another object of the present disclosure is to provide a method for preparing the multilayered separator for a lithium secondary battery.

A multilayered separator for a lithium secondary battery according to some embodiments of the present disclosure includes: a porous substrate; a first coating layer disposed on one surface of the porous substrate, and including a first binder, a nitrate compound and a first lithium salt; and a second coating layer disposed on a surface of the porous substrate opposite the surface in contact with the first coating layer, and including a second binder and a second lithium salt.

In some embodiments, the nitrate compound may include at least one selected from the group consisting of lithium nitrate, cerium nitrate and silver nitrate.

In some embodiments, the content of the nitrate compound may be 5 to 15 parts by weight based on 100 parts by weight of the first binder.

In some embodiments, the second coating layer may not include the nitrate compound.

In some embodiments, the first lithium salt and the second lithium salt may each independently include at least one selected from the group consisting of LiF, LiCl, LiBr, LiI, LiNO₃, LiN(CN)₂, LiBF₄, LiClO₄, LiPF₆, Li(CF₃)₂PF₄, Li(CF₃)₃PF₃, Li(CF₃)₄PF₂, Li(CF₃)₅PF, Li(CF₃)₆P, LiCF₃SO₃, LiCF₃CF₂SO₃, Li(CF₃SO₂)₂N, Li(FSO₂)₂N, LiCF₃CF₂(CF₃)₂CO, Li(CF₃SO₂)₂CH, Li(SF₅)₃C, Li(CF₃SO₂)₃C, LiCF₃(CF₂)₇SO₃, LiCF₃CO₂, LiCH₃CO₂, LiSCN and Li(CF₃CF₂SO₂)₂N.

In some embodiments, the porous substrate may have a thickness of 2 µm to 20 µm, and the first coating layer and the second coating layer may each independently have a thickness of 1 µm to 20 µm.

In some embodiments, the first binder and the second binder each independently may include at least one selected from the group consisting of polyethylene oxide (PEO), polytetrafluoroethylene (PTFE), polyurethane (PU), polyacrylonitrile (PAN), polymethyl methacrylate (PMMA), polyvinylidene fluoride (PVDF), and poly(vinylidene fluoride-co-hexafluoropropylene) (PVDF-HFP).

In some embodiments, the first coating layer and the second coating layer each independently may further include at least one selected from the group consisting of an oxide-based solid electrolyte, a sulfide-based solid electrolyte and a polymer electrolyte.

In some embodiments, the porous substrate may include: a first region adjacent to the first coating layer and including a first binder, a nitrate compound and a first lithium salt within its pores; and a second region adjacent to the second coating layer and including a second binder and a second lithium salt within its pores.

A lithium secondary battery according to the present disclosure includes: a cathode; an anode facing the cathode and including a lithium metal layer; and the above-described multilayered separator for a lithium secondary battery disposed between the cathode and the anode.

In some embodiments, the multilayered separator for a lithium secondary battery may be disposed such that the first coating layer is adjacent to the lithium metal layer of the anode and the second coating layer is adjacent to the cathode.

In some embodiments, the lithium secondary battery may further include a nitrogen-based solid electrolyte interfacial layer disposed between the first coating layer and the lithium metal layer.

A method for preparing a multilayered separator for a lithium secondary battery according to the present disclosure includes: applying a first coating composition, including a first binder, a nitrate compound, a first lithium salt and a solvent, onto one surface of a release substrate; laminating a porous substrate onto the applied first coating composition; applying a second coating composition, including a second binder, a second lithium salt and a solvent, onto the porous substrate; and performing a drying process.

In some embodiments, the content of the first lithium salt in the first coating composition may be 0.5 M to 2 M, and the content of the second lithium salt in the second coating composition may be 0.5 M to 2 M.

The multilayered separator for a lithium secondary battery according to some embodiments of the present disclosure may promote uniform lithium deposition, thereby suppressing the formation of lithium dendrites.

The multilayered separator for a lithium secondary battery according to some embodiments of the present disclosure may exhibit excellent mechanical properties, thereby preventing damage even in the presence of lithium dendrites.

The lithium secondary battery according to some embodiments of the present disclosure may exhibit enhanced cycle life properties by including the multilayered separator for a lithium secondary battery.

The lithium secondary battery of the present disclosure may be widely applied in green technology fields, such as electric vehicles, battery charging stations, as well as solar power generation, wind power generation, and the like, which use the batteries. Further, the lithium secondary battery of the present disclosure may be used in eco-friendly electric vehicles, hybrid vehicles, and the like, which are aimed at mitigating climate change by reducing air pollution and greenhouse gas emissions.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view of a multilayered separator for a lithium secondary battery according to an embodiment;
FIG. 2 is a schematic cross-sectional view of a lithium secondary battery according to an embodiment;
FIG. 3 is a graph showing capacity retention according to Examples 1 to 6;
FIG. 4 is a graph showing current and voltage according to Comparative Example 1; and
FIG. 5 is a graph showing current and voltage according to Comparative Example 2.

### [DETAILED DESCRIPTION OF THE INVENTION]

A multilayered separator for a lithium secondary battery(hereinafter, may be abbreviated as a multilayered separator) according to some embodiments of the present disclosure includes a first coating layer and a second coating layer having different compositions on both sides of a porous substrate. In addition, a method for preparing the multilayered separator and a lithium secondary battery including the multilayered separator are also provided.

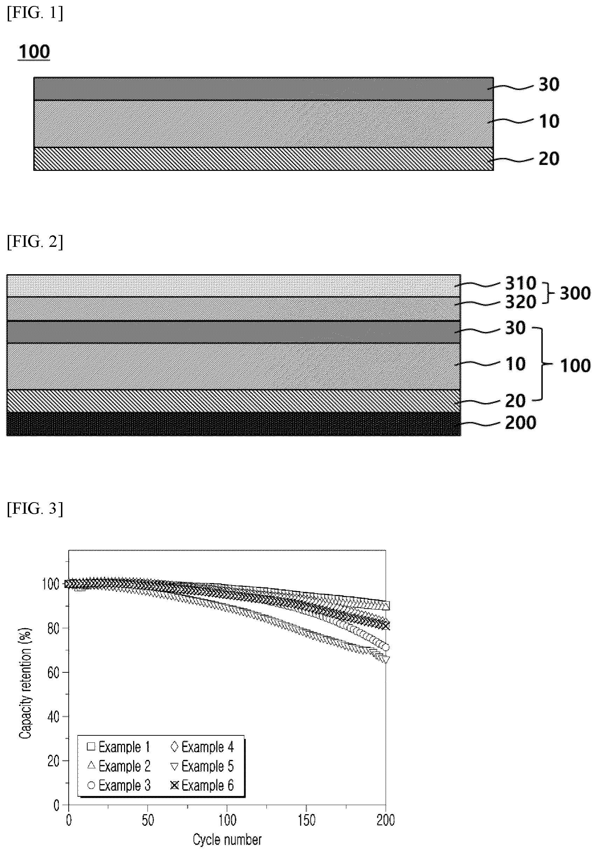

FIG. 1 is a schematic cross-sectional view of a multilayered separator for a lithium secondary battery according to an embodiment.

Referring to FIG. 1, a multilayered separator 100 includes a porous substrate 10, a first coating layer 20 disposed on one surface of the porous substrate 10, and a second coating layer 30 disposed on the opposite surface of the porous substrate 10.

The porous substrate 10 may have a structure including three-dimensional pores, and may be a porous polymer film commonly used for separators.

The porous substrate 10 may include a porous polymer film made of a polyolefin polymer such as ethylene homopolymer, propylene homopolymer, ethylene/butene copolymer, ethylene/hexene copolymer, ethylene/methacrylate copolymer. The porous substrate 10 may also include a nonwoven fabric made of glass fibers having a high melting point, polyethylene terephthalate fibers, but is not limited thereto.

The porous substrate 10 may have a thickness of 2 µm to 20 µm. According to some embodiments, the porous substrate 10 may have a thickness of 2 µm to 10 µm. Within the above range, the electrodes may be reliably electrically isolated without significantly increasing the volume of the battery.

The first coating layer 20 may include a first binder, a nitrate compound, and a first lithium salt. The first coating layer 20 may, for example, be disposed to face a lithium metal electrode described below. In this case, a solid electrolyte interfacial layer (SEI) containing nitrogen derived from the nitrate compound of the first coating layer 20 may be formed on the surface of the lithium metal electrode during repeated charging and discharging of the battery. Accordingly, lithium may be uniformly deposited on the surface of the lithium metal electrode, and the formation of lithium dendrites may be suppressed.

Furthermore, even if the nitrogen-based solid electrolyte interfacial layer is damaged or consumed during repeated battery charge and discharge cycles, nitrogen may be continuously supplied from the first coating layer 20, and the nitrogen-based solid electrolyte interfacial layer may be maintained in a stable state. Accordingly, the cycle life properties of the battery may be further improved.

In some embodiments, the nitrate compound may include a metal nitrate. In some embodiments, the nitrate compound may include at least one selected from the group consisting of lithium nitrate, cerium nitrate, and silver nitrate. For example, the nitrate compound may include lithium nitrate.

The nitrate compound may decompose during repeated battery charge and discharge cycles, thereby forming a nitrogen-based solid electrolyte interfacial layer on the surface of the lithium metal electrode.

In some embodiments, the content of the nitrate compound may be 5 to 15 parts by weight ("wt parts") based on 100 wt parts of the first binder. In some embodiments, the content of the nitrate compound may be specifically 5 to 12 wt parts, or more specifically 8 to 12 wt parts, based on 100 wt parts of the first binder. Within the above range, a robust nitrogen-based solid electrolyte interfacial layer may be formed on the surface of the lithium metal electrode without reducing the rate of lithium ion migration.

The first binder may be a polymer compound that forms a framework of the first coating layer 20. The first coating layer 20 may include a nitrate compound and a first lithium salt contained in a matrix formed by the first binder.

The first binder may include polyethylene oxide (PEO), polytetrafluoroethylene (PTFE), polyurethane (PU), polyacrylonitrile (PAN), polymethyl methacrylate (PMMA), polyvinylidene fluoride (PVDF), poly(vinylidene fluoride-co-hexafluoropropylene) (PVDF-HFP), but is not limited thereto. These may be used alone or in combination of two or more thereof.

The first lithium salt may include, for example, LiF, LiCl, LiBr, LiI, LiNO₃, LiN(CN)₂, LiBF₄, LiClO₄, LiPF₆, Li(CF₃)₂PF₄, Li(CF₃)₃PF₃, Li(CF₃)₄PF₂, Li(CF₃)₅PF, Li(CF₃)₆P, LiCF₃SO₃, LiCF₃CF₂SO₃, Li(CF₃SO₂)₂N, Li(FSO₂)₂N, LiCF₃CF₂(CF₃)₂CO, Li(CF₃SO₂)₂CH, Li(SF₅)₃C, Li(CF₃SO₂)₃C, LiCF₃(CF₂)₇SO₃, LiCF₃CO₂, LiCH₃CO₂, LiSCN, Li(CF₃CF₂SO₂)₂N, but is not limited thereto. These may be used alone or in combination of two or more thereof.

The first coating layer 20 may have a thickness of 1 µm to 20 µm. In some embodiments, the first coating layer 20 may have a thickness of 2 µm to 18 µm, more specifically, 2 µm to 15 µm, or even more specifically, 5 µm to 15 µm. Within the above range, a nitrogen-based solid electrolyte interfacial layer may be formed and maintained on the surface of the lithium metal electrode, and a thin-profile battery may be provided.

The second coating layer 30 may include a second binder and a second lithium salt.

In some embodiments, the second binder may be a polymer compound that forms a framework of the second coating layer 30. The second coating layer 30 may include a second lithium salt contained in a matrix formed by the second binder.

The second binder may include polyethylene oxide (PEO), polytetrafluoroethylene (PTFE), polyurethane (PU), polyacrylonitrile (PAN), polymethyl methacrylate (PMMA), polyvinylidene fluoride (PVDF), poly(vinylidene fluoride-co-hexafluoropropylene) (PVDF-HFP), but is not limited thereto. These may be used alone or in combination of two or more thereof.

The second lithium salt may include, for example, LiF, LiCl, LiBr, LiI, LiNO₃, LiN(CN)₂, LiBF₄, LiClO₄, LiPF₆, Li(CF₃)₂PF₄, Li(CF₃)₃PF₃, Li(CF₃)₄PF₂, Li(CF₃)₅PF, Li(CF₃)₆P, LiCF₃SO₃, LiCF₃CF₂SO₃, Li(CF₃SO₂)₂N, Li(FSO₂)₂N, LiCF₃CF₂(CF₃)₂CO, Li(CF₃SO₂)₂CH, Li(SF₅)₃C, Li(CF₃SO₂)₃C, LiCF₃(CF₂)₇SO₃, LiCF₃CO₂, LiCH₃CO₂, LiSCN, Li(CF₃CF₂SO₂)₂N, but is not limited thereto. These may be used alone or in combination of two or more thereof.

The second binder and second lithium salt may be the same as or different from the above-described first binder and first lithium salt.

The second coating layer 30 may not include a nitrate compound. For example, the second coating layer 30 may be adjacent to a cathode, and the nitrate compound may decompose on the surface of the cathode, forming byproducts. Accordingly, the byproducts formed inside the battery may degrade battery performance.

The second coating layer 30 may have a thickness of 1 µm to 20 µm. According to some embodiments, the second coating layer 30 may have a thickness of specifically 1 µm to 14 µm, or more specifically 1 µm to 10 µm. Within the above range, a nitrogen-based solid electrolyte interfacial layer may be formed and maintained on the surface of the lithium metal electrode, and a thin-profile battery may be provided.

In some embodiments, the first coating layer 20 and the second coating layer 30 may each independently further include a solid electrolyte, and the solid electrolyte may include all-solid-state electrolyte or semi-solid-state electrolyte. For example, the first coating layer 20 and the second coating layer 30 may include at least one selected from the group consisting of an oxide-based solid electrolyte, a sulfide-based solid electrolyte, a polymer electrolyte, but is not limited thereto.

The oxide-based solid electrolyte may include, for example, LLTO(lithium lanthanum titanium oxide) compounds, LLZO(lithium lanthanum zirconium oxide) compounds, LLZTO(lithium lanthanum zirconium tantalum oxide) compounds such as Li_{6.4}La₃Zr_{1.4}Ta_{0.6}O₁₂, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP(lithium aluminum germanium phosphate) compounds, LATP(lithium aluminum titanium phosphate) compounds, Li₁₊ₓTi₂₋ₓAlₓSi_{y}(PO₄)₃ (0≤x≤1, 0≤y≤1), LiAlₓZr₂₋ₓ(PO₄)₃ (0≤x≤1, 0≤y≤1), LiTiₓZr₂₋ₓ(PO₄)₃ (0≤x≤1, 0≤y≤1) LISICON(Lithium Super Ionic Conductor) compounds, LIPON(Lithium Phosphorus Oxynitride) compounds, perovskite compounds, NASICON(Na Superionic Conductor) compounds, and metal oxides such as Al₂O₃, ZnO₂, Ce₂O₂, TiO₂, ZrO₂, HfO₂, MnO₂, MgO, WO₂, and V₂O₅. These may be used alone or in combination of two or more thereof.

The sulfide-based solid electrolyte may include, for example, Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-Lil, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), but is not limited thereto. These may be used alone or in combination of two or more thereof.

The polymer electrolyte may not only refer to an all-solid-state electrolyte, but also refer to a gel polymer electrolyte in which an electrolyte is included in a polymer-based electrolyte. For example, the gel polymer electrolyte may be in the form (physical gel) in which the electrolyte is swelled after preparing a polymer matrix, or in the form (chemical gel) prepared by curing a composition, in which the electrolyte and monomer are mixed, depending on the preparation method thereof.

The gel polymer electrolyte may be prepared from precursor for forming a gel polymer electrolyte, and the precursor for forming a gel polymer electrolyte may include a precursor that is polymerizable by energy, such as light irradiation, after the multilayered separator 100 is assembled into a battery. For example, the precursor for forming a gel polymer electrolyte may include a monomer or oligomer for forming a gel polymer electrolyte.

In some embodiments, the porous substrate 10 may include a first region adjacent to the first coating layer 20 and including a first binder, a nitrate compound and a first lithium salt within its pores, and a second region adjacent to the second coating layer 30 and including a second binder and a second lithium salt within its pores.

The first region and the second region may be formed through the preparation process of the multilayered separator 100 described below. For example, the first region may be formed by applying a composition for forming the first coating layer 20 (a first coating composition), followed by laminating the porous substrate 10, and the second region may be formed by applying a composition for forming the second coating layer 30 (a second coating composition) onto the porous substrate 10.

In some embodiments, the porosity of the multilayered separator 100 may be 20% to 90%. The porosity may be expressed as a percentage of the volume of pores in each layer based on the total volume of the porous substrate 10, the first coating layer 20 and the second coating layer 30.

According to some embodiments, the elongation rate of the multilayered separator 100 may be 20% to 300%. The elongation may be expressed as a percentage value of the difference between the length of the multilayered separator 100 before stretching and the length of the multilayered separator 100 increased by stretching in the longitudinal direction, relative to the length of the multilayered separator 100 before stretching.

Within the above range, the mechanical properties of the multilayered separator 100 may be improved, so that even if lithium dendrites are formed, the multilayered separator 100 may not be easily damaged.

The pores included in the porous substrate 10, the first coating layer 20, and the second coating layer 30 may have a pore diameter of 10 nm to 5 µm.

According to someembodiments of the present disclosure, a method for preparing the multilayered separator for a lithium secondary battery is provided.

First, a first coating composition may be applied onto one surface of a release substrate. The first coating composition may include a first binder, a nitrate compound, a first lithium salt and a solvent.

The release substrate may be removed after the preparation of the multilayered separator is completed.

The first binder, nitrate compound, and first lithium salt may be the same as previously described.

The solvent may be an organic solvent. For example, as the organic solvent, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, or tetrahydrofuran may be used. These may be used alone or in combination of two or more thereof.

The first coating composition may be prepared by adding a first binder and a nitrate compound to a solution containing a first lithium salt dissolved in a solvent.

The content of the first lithium salt in the solution may be 0.5 M to 2 M. In some embodiments, the content of the first lithium salt in the solution may be 0.8 M to 1.2 M. Within the above range, the rate of lithium ion migration in the first coating layer may be enhanced.

The first binder may be added in an amount of 50 to 200 wt parts based on 100 wt parts of the solution. The nitrate compound may be added in an amount of 5 to 15 wt parts based on 100 wt parts of the first binder.

Next, a porous substrate may be laminated onto the applied first coating composition. When the porous substrate is laminated without drying the first coating composition, the first coating composition may penetrate into the pores of the porous substrate from the surface adjacent to the first coating composition to which the porous substrate is applied. Accordingly, the above-described first region may be formed.

Next, a second coating composition is applied onto the porous substrate. The second coating composition includes a second binder, a second lithium salt and a solvent. When the second coating composition is applied onto the porous substrate, the second coating composition may penetrate into the pores of the porous substrate under the influence of gravity. Accordingly, the above-described second region may be formed.

The second binder and the second lithium salt may be the same as previously described, and the solvent may be the same as the solvent described in connection with the first coating composition.

The second coating composition may be prepared by adding the second binder to a solution containing the second lithium salt dissolved in a solvent.

The content of the second lithium salt in the solution may be 0.5 M to 2 M. In some embodiments, the content of the second lithium salt in the solution may be 0.8 M to 1.2 M. Within the above range, the rate of lithium ion migration in the second coating layer may be enhanced.

The second binder may be added in an amount of 50 to 200 wt parts based on 100 wt parts of the solution.

Thereafter, a drying process may be performed to remove the solvent contained in the first and second coating compositions, thereby forming the first coating layer and the second coating layer. The drying may be performed, for example, at a temperature of 25°C to 100°C for approximately 1 to 12 hours.

According to some embodiments of the present disclosure, a lithium secondary battery including the multilayered separator is provided.

FIG. 2 is a schematic cross-sectional view of a lithium secondary battery according to an embodiment.

Referring to FIG. 2, the lithium secondary battery includes a cathode 300, an anode 200 facing the cathode 300 and including a lithium metal layer, and the multilayered separator 100 disposed between the cathode 300 and the anode 200. The lithium secondary battery may be a lithium metal battery.

The cathode 300 may include a cathode current collector 310 and a cathode active material layer 320 disposed on at least one surface of the cathode current collector 310. Although FIG. 2 illustrates a case where the cathode active material layer 320 is disposed only on one surface of the cathode current collector 310, the cathode active material layer 320 may alternatively be formed on both surfaces of the cathode current collector 310.

The cathode current collector 310 may include a metal such as stainless steel, nickel, aluminum, titanium, copper, magnesium, iron, zinc, or an alloy thereof. In an embodiment, the cathode current collector 310 may be omitted. In this case, the cathode 300 may be composed solely of the cathode active material layer 320.

The cathode active material layer 320 may include a cathode active material. The cathode active material may include a compound capable of reversibly intercalating and deintercalating lithium ions.

According to some embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and - 0.5≤z≤0.1. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In an embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b}M2_{c}O_{2+z}

In Formula 1-1, M1 may include Co, Mn and/or Al. M2 may include the above-described auxiliary elements. In Formula 1-1, x, a, b, c and z may satisfy 0.9≤x≤1.2, 0.6≤a≤0.99, 0.01≤b+c≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide having an increased content of nickel may be used.

Ni may be provided as a transition metal associated with the output and capacity of the lithium secondary battery. Therefore, as described above, by employing a high-content (high-Ni) composition in the cathode active material, a high-capacity cathode and a high-capacity lithium secondary battery may be provided.

However, as the Ni content increases, the long-term storage stability and cycle life stability of the cathode or the secondary battery may relatively decrease, and side reactions with the electrolyte may also increase. However, according to some embodiments, the cycle life stability and capacity retention properties may be improved through Mn while maintaining electrical conductivity by including Co.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which have a chemical structure or a crystal structure represented by Formula 2 below.

[Formula 2] p[Li₂MnO_{3]}·(1-p)[Li_{q}JO₂]

In Formula 2, p and q may satisfy 0<p<1, 0.9≤q≤1.2, and J may include at least one element selected from the group consisting of Mn, Ni, Co, Fe, Cr, V, Cu, Zn, Ti, Al, Mg and B.

The cathode active material layer 320 may further include a binder and/or a conductive material. The binder may include an organic binder such as vinylidene fluoride-hexafluoropropylene copolymer (PVDF-co-HFP), polyvinylidene fluoride (PVDF), polyacrylonitrile, polymethyl methacrylate, acrylonitrile butadiene rubber (NBR), polybutadiene rubber (BR), styrene-butadiene-styrene rubber (SBSR), or an aqueous binder such as styrene-butadiene rubber (SBR), and may be used in combination with a thickener such as carboxymethyl cellulose (CMC). In an embodiment, a PVDF-based binder may be used as the binder for the cathode.

The conductive material may be included to promote electron mobility/conductivity between active material particles. For example, the conductive material may include carbon-based conductive materials such as graphite, carbon black, graphene, carbon nanotubes (CNTs), vapor-grown carbon fibers (VGCFs), and/or metal-based conductive materials, including perovskite materials, such as tin, tin oxide, titanium oxide, LaSrCoO₃, and LaSrMnO₃.

The cathode 300 may be formed by coating a cathode composition (e.g., in the form of a slurry) including the cathode active material onto the cathode current collector 310, followed by drying and roll-pressing to form the cathode active material layer 320. The cathode composition may be prepared by dispersing the cathode active material, the binder, the conductive material, and the like in a solvent.

When the cathode current collector 310 is omitted, the cathode composition may be thermally molded in a mold to form the cathode active material layer 320.

The anode 200 may include a lithium metal layer. Although FIG. 2 illustrates a case where the anode 200 is composed solely of a lithium metal layer, the anode 200 may also include an anode current collector and a lithium metal layer disposed on the anode current collector.

In some embodiments, the multilayered separator 100 may be arranged such that the first coating layer 20 is adjacent to the lithium metal layer of the anode 200, and the second coating layer 30 is adjacent to the cathode 300. Accordingly, the nitrate compound included in the first coating layer 20 may decompose on the surface of the anode 200, thereby forming a nitrogen-based solid electrolyte interfacial layer.

The nitrogen-based solid electrolyte interfacial layer may be disposed between the lithium metal layer of the anode 200 and the first coating layer 20. Accordingly, lithium may be uniformly deposited on the surface of the lithium metal layer, thereby enhancing the cycle life properties of the battery.

The nitrogen-based solid electrolyte interfacial layer may be formed after the formation charge and discharge process of the lithium secondary battery. For example, a lithium secondary battery may be formed by assembling the cathode 300, the anode 200 and the multilayered separator 100, and then performing charging and discharging to form the nitrogen-based solid electrolyte interfacial layer.

The invention is also defined by the following aspects:
Aspect 1. A multilayered separator for a lithium secondary battery comprising:
   a porous substrate;
   a first coating layer disposed on one surface of the porous substrate, and comprising a first binder, a nitrate compound and a first lithium salt; and
   a second coating layer disposed on a surface of the porous substrate opposite the surface in contact with the first coating layer, and comprising a second binder and a second lithium salt.
Aspect 2. The multilayered separator for a lithium secondary battery according to aspect 1, wherein the nitrate compound comprises at least one selected from the group consisting of lithium nitrate, cerium nitrate and silver nitrate.
Aspect 3. The multilayered separator for a lithium secondary battery according to any one of aspect 1 and 2, wherein the content of the nitrate compound is 5 to 15 parts by weight based on 100 parts by weight of the first binder.
Aspect 4. The multilayered separator for a lithium secondary battery any one of aspect 1 to 3, wherein the second coating layer does not include the nitrate compound.
Aspect 5. The multilayered separator for a lithium secondary battery according to any one of aspect to 1 to 4, wherein the first lithium salt and the second lithium salt each independently comprise at least one selected from the group consisting of LiF, LiCl, LiBr, LiI, LiNO₃, LiN(CN)₂, LiBF₄, LiClO₄, LiPF₆, Li(CF₃)₂PF₄, Li(CF₃)₃PF₃, Li(CF₃)₄PF₂, Li(CF₃)₅PF, Li(CF₃)₆P, LiCF₃SO₃, LiCF₃CF₂SO₃, Li(CF₃SO₂)₂N, Li(FSO₂)₂N, LiCF₃CF₂(CF₃)₂CO, Li(CF₃SO₂)₂CH, Li(SF₅)₃C, Li(CF₃SO₂)₃C, LiCF₃(CF₂)₇SO₃, LiCF₃CO₂, LiCH₃CO₂, LiSCN and Li(CF₃CF₂SO₂)₂N.
Aspect 6. The multilayered separator for a lithium secondary battery according to any one of aspect 1 to 5, wherein the porous substrate has a thickness of 2 µm to 20 µm, and the first coating layer and the second coating layer each independently have a thickness of 1 µm to 20 µm.
Aspect 7. The multilayered separator for a lithium secondary battery according to aspect 1 to 6, wherein the first binder and the second binder each independently comprise at least one selected from the group consisting of polyethylene oxide (PEO), polytetrafluoroethylene (PTFE), polyurethane (PU), polyacrylonitrile (PAN), polymethyl methacrylate (PMMA), polyvinylidene fluoride (PVDF), and poly(vinylidene fluoride-co-hexafluoropropylene) (PVDF-HFP).
Aspect 8. The multilayered separator for a lithium secondary battery according to aspect 1 to 7, wherein the first coating layer and the second coating layer each independently further comprise at least one selected from the group consisting of an oxide-based solid electrolyte, a sulfide-based solid electrolyte and a polymer electrolyte.
Aspect 9. The multilayered separator for a lithium secondary battery according to any one of aspect 1 to 8, wherein the porous substrate comprises:
   a first region adjacent to the first coating layer and comprising a first binder, a nitrate compound and a first lithium salt within its pores; and
   a second region adjacent to the second coating layer and comprising a second binder and a second lithium salt within its pores.
Aspect 10. A lithium secondary battery comprising:
   a cathode;
   an anode facing the cathode and comprising a lithium metal layer; and
   the multilayered separator for a lithium secondary battery according to aspect 1 disposed between the cathode and the anode.
Aspect 11. The lithium secondary battery according to aspect 10, wherein the multilayered separator for a lithium secondary battery is disposed such that the first coating layer is adjacent to the lithium metal layer of the anode and the second coating layer is adjacent to the cathode.
Aspect 12. The lithium secondary battery according to aspect 11, wherein the lithium secondary battery further comprises a nitrogen-based solid electrolyte interfacial layer disposed between the first coating layer and the lithium metal layer.
Aspect 13. A method for preparing a multilayered separator for a lithium secondary battery comprising:
   applying a first coating composition, comprising a first binder, a nitrate compound, a first lithium salt and a solvent, onto one surface of a release substrate;
   laminating a porous substrate onto the applied first coating composition;
   applying a second coating composition, comprising a second binder, a second lithium salt and a solvent, onto the porous substrate; and
   performing a drying process.
Aspect 14. The method for preparing a multilayered separator for a lithium secondary battery according to aspect 13, wherein the content of the first lithium salt in the first coating composition is 0.5 M to 2 M, and the content of the second lithium salt in the second coating composition is 0.5 M to 2 M.

### Example 1

### Preparation of multilayered separator

A solution was prepared, including lithium bis(trifluoromethanesulfonyl)imide (LiTFSI) dissolved at a concentration of 0.5 M in a mixed solvent containing ethylene carbonate, ethyl methyl carbonate and tetrahydrofuran in a volume ratio of 25:50:25. To 100 wt parts of the solution, 100 wt parts of poly(vinylidene fluoride-co-hexafluoropropylene) and 10 wt parts of LiNO₃ were added to prepare a first coating composition.

A solution was prepared, including lithium bis(trifluoromethanesulfonyl)imide (LiTFSI) dissolved at a concentration of 0.5 M in a mixed solvent containing ethylene carbonate, ethyl methyl carbonate and tetrahydrofuran in a volume ratio of 25:50:25. To 100 wt parts of the solution, 100 wt parts of poly(vinylidene fluoride-co-hexafluoropropylene) were added to prepare a second coating composition.

The first coating composition was applied onto the surface of a release substrate (PVDF-HFP film), and a porous substrate (e-PTFE) was laminated onto the applied first coating composition.

The second coating composition was applied onto the upper surface of the porous substrate, followed by primary drying at room temperature for 1 hour and secondary drying at 60°C for 12 hours. The release substrate was then removed to produce a multilayered separator. The porous substrate had a thickness of 6 µm, the first layer had a thickness of 10 µm, and the second layer had a thickness of 8 µm.

### Manufacture of secondary battery

A cathode slurry was prepared by adding 95 wt% lithium-cobalt oxide as a cathode active material, 2.5 wt% polyvinylidene fluoride (PVDF) as a binder, and 2.5 wt% Super-P as a conductive material to N-methylpyrrolidone (NMP). The cathode slurry was uniformly applied to an aluminum substrate having a thickness of 12 µm, followed by drying and roll-pressing to prepare a cathode.

A lithium foil was used as the anode.

The cathode and anode were respectively notched into a predetermined size and stacked with the multilayered separator interposed between them to produce an electrode assembly. In this case, the electrode assembly was manufactured such that the first coating layer of the multilayered separator was placed adjacent to the anode.

The electrode assembly was placed in a pouch and sealed on three sides, leaving one side open for electrolyte injection ("electrolyte injection side"). At this time, a portion with electrode tabs was included in the sealing part. After injecting an electrolyte through the electrolyte injection side, the remaining electrolyte injection side was also sealed, and the assembly was then impregnated for 12 hours or more to manufacture a 250 mAh lithium secondary battery.

A solution of 0.8M LiTFSI, 0.2M LiDFBP and 0.05M LiPF₆ in a mixed solvent of fluoroethylene carbonate (FEC)/ ethyl methyl carbonate (EMC) (1/3 by volume) was used as the electrolyte.

### Example 2

A multilayered separator and a secondary battery were manufactured in the same manner as in Example 1, except that AgNO₃ was used instead of LiNO₃.

### Example 3

A multilayered separator and a secondary battery were manufactured in the same manner as in Example 1, except that 15 wt parts of LiNO₃ were added during the preparation of the first coating composition.

### Example 4

A multilayered separator and a secondary battery were manufactured in the same manner as in Example 1, except that 5 wt parts of LiNO₃ were added during the preparation of the first coating composition.

### Example 5

A multilayered separator and a secondary battery were manufactured in the same manner as in Example 1, except that the thickness of the second coating layer was changed to 15 µm.

### Example 6

A multilayered separator and a secondary battery were manufactured in the same manner as in Example 1, except that the first coating layer and the second coating layer were formed using the first coating composition.

### Comparative Example 1

A multilayered separator and secondary battery were manufactured in the same manner as in Example 1, except that the first coating layer and the second coating layer were formed using the second coating composition.

### Comparative Example 2

The first coating composition of Example 1 was applied onto the surface of a release substrate (PVDF-HFP film), and a porous substrate (e-PTFE) was laminated onto the applied first coating composition. A lithium secondary battery was manufactured in the same manner as in Example 1, except that, after primary drying at room temperature for 1 hour and secondary drying at 60°C for 12 hours, the release substrate was removed to prepare a multilayered separator.

### Experimental Example 1: Evaluation of capacity retention

The lithium secondary batteries of the examples and comparative examples were charged (CC-CV 0.33C, 0.05C cut-off) and discharged (CC 1C) at 25°C within a cycle voltage range of 3 to 4.3V. The charging and discharging process was defined as one cycle, and was repeated for 200 cycles, after which the capacity retention was measured. The discharge capacity after 200 cycles was calculated as the capacity retention (%) relative to the discharge capacity after the first cycle, and the capacity retention as a function of the number of cycles is shown in Table 1 below.

If the capacity retention could not be measured due to a short circuit or failure to operate before reaching 200 charge and discharge cycles, it was marked as "Unmeasurable."

The measurement results are shown in Table 1 below and FIGS. 3 to 5.

FIG. 3 is a graph showing the capacity retention for Examples 1 to 6.

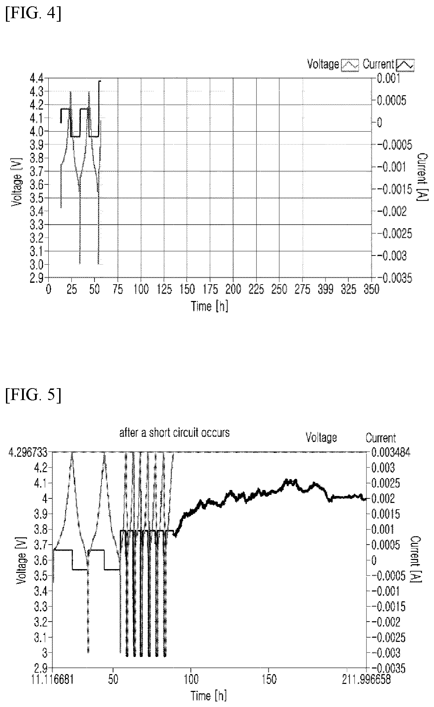

FIG. 4 is a graph showing the current and voltage for Comparative Example 1.

FIG. 5 is a graph showing the current and voltage for Comparative Example 2.

**[TABLE 1]**

| Classification | Capacity retention (%) |
|---|---|
| Example 1 | 89.8 |
| Example 2 | 89.4 |
| Example 3 | 71.6 |
| Example 4 | 81.9 |
| Example 5 | 65.9 |
| Example 6 | 81.3 |
| Comparative Example 1 | Unmeasurable |
| Comparative Example 2 | Unmeasurable |

Referring to Table 1 and FIGS. 3 to 5, it was confirmed that the comparative examples experienced short circuits or showed no current flow at a high rate (1C).

In addition, Examples 3 and 4, which included 15 and 5 wt parts of the nitrate compound, respectively, exhibited slightly lower capacity retention than Examples 1 and 2.

Example 5, in which the thickness of the second coating layer was 15 µm, exhibited slightly lower capacity retention than Examples 1 or 2.

## Claims

1. A multilayered separator for a lithium secondary battery comprising:
a porous substrate;
a first coating layer disposed on one surface of the porous substrate, and comprising a first binder, a nitrate compound and a first lithium salt; and
a second coating layer disposed on a surface of the porous substrate opposite the surface in contact with the first coating layer, and comprising a second binder and a second lithium salt.

2. The multilayered separator for a lithium secondary battery according to claim 1, wherein the nitrate compound comprises at least one selected from the group consisting of lithium nitrate, cerium nitrate and silver nitrate.

3. The multilayered separator for a lithium secondary battery according to any one of claims 1 and 2, wherein the content of the nitrate compound is 5 to 15 parts by weight based on 100 parts by weight of the first binder.

4. The multilayered separator for a lithium secondary battery according to any one of claims 1 to 3, wherein the second coating layer does not include the nitrate compound.

5. The multilayered separator for a lithium secondary battery according to any one of claims 1 to 4, wherein the first lithium salt and the second lithium salt each independently comprise at least one selected from the group consisting of LiF, LiCl, LiBr, LiI, LiNO₃, LiN(CN)₂, LiBF₄, LiClO₄, LiPF₆, Li(CF₃)₂PF₄, Li(CF₃)₃PF₃, Li(CF₃)₄PF₂, Li(CF₃)₅PF, Li(CF₃)₆P, LiCF₃SO₃, LiCF₃CF₂SO₃, Li(CF₃SO₂)₂N, Li(FSO₂)₂N, LiCF₃CF₂(CF₃)₂CO, Li(CF₃SO₂)₂CH, Li(SF₅)₃C, Li(CF₃SO₂)₃C, LiCF₃(CF₂)₇SO₃, LiCF₃CO₂, LiCH₃CO₂, LiSCN and Li(CF₃CF₂SO₂)₂N.

6. The multilayered separator for a lithium secondary battery according to any one of claims 1 to 5, wherein the porous substrate has a thickness of 2 µm to 20 µm, and the first coating layer and the second coating layer each independently have a thickness of 1 µm to 20 µm.

7. The multilayered separator for a lithium secondary battery according to any one of claims 1 to 6, wherein the first binder and the second binder each independently comprise at least one selected from the group consisting of polyethylene oxide (PEO), polytetrafluoroethylene (PTFE), polyurethane (PU), polyacrylonitrile (PAN), polymethyl methacrylate (PMMA), polyvinylidene fluoride (PVDF), and poly(vinylidene fluoride-co-hexafluoropropylene) (PVDF-HFP).

8. The multilayered separator for a lithium secondary battery according to any one of claims 1 to 7, wherein the first coating layer and the second coating layer each independently further comprise at least one selected from the group consisting of an oxide-based solid electrolyte, a sulfide-based solid electrolyte and a polymer electrolyte.

9. The multilayered separator for a lithium secondary battery according to any one of claims 1 to 8, wherein the porous substrate comprises:
a first region adjacent to the first coating layer and comprising a first binder, a nitrate compound and a first lithium salt within its pores; and
a second region adjacent to the second coating layer and comprising a second binder and a second lithium salt within its pores.

10. A lithium secondary battery comprising:
a cathode (300);
an anode (200) facing the cathode (300) and comprising a lithium metal layer; and
the multilayered separator for a lithium secondary battery (100) according to claim 1 disposed between the cathode (300) and the anode (200).

11. The lithium secondary battery according to claim 10, wherein the multilayered separator for a lithium secondary battery (100) is disposed such that the first coating layer (20) is adjacent to the lithium metal layer of the anode (200) and the second coating layer (30) is adjacent to the cathode (300).

12. The lithium secondary battery according to claim 11, wherein the lithium secondary battery further comprises a nitrogen-based solid electrolyte interfacial layer disposed between the first coating layer and the lithium metal layer.

13. A method for preparing a multilayered separator for a lithium secondary battery comprising:
applying a first coating composition, comprising a first binder, a nitrate compound, a first lithium salt and a solvent, onto one surface of a release substrate;
laminating a porous substrate onto the applied first coating composition;
applying a second coating composition, comprising a second binder, a second lithium salt and a solvent, onto the porous substrate; and
performing a drying process.

14. The method for preparing a multilayered separator for a lithium secondary battery according to claim 13, wherein the content of the first lithium salt in the first coating composition is 0.5 M to 2 M, and the content of the second lithium salt in the second coating composition is 0.5 M to 2 M.
